# EUROPEAN PATENT SPECIFICATION

(11) **EP 1 456 066 B1**
(45) Date of publication and mention of the grant of the patent: **24.08.2005**
(21) Application number: 02793682.2
(22) Date of filing: 18.12.2002
(51) Int. Cl.: B60R 25/00, G07C 9/00

(54) **METHOD AND SYSTEM FOR IDENTIFICATION**
IDENTIFIKATIONSVERFAHREN UND SYSTEM
PROCEDE ET SYSTEME D'IDENTIFICATION

(30) Priority: 21.12.2001 SE 0104382
(43) Date of publication of application: 15.09.2004
(73) Proprietor: Atlas Copco Rock Drills AB, 701 91 Örebro (SE)
(72) Inventor: KNUTSSON, Jan, S-715 31 Odensbacken (SE); RAMSTRÖM, Mikael, S-703 78 Örebro (SE); SANDSTRÖM, Lars, S-716 31 Fjugesta (SE); PETTERSSON, Roland, S-703 48 Örebro (SE)
(74) Representative: Janson, Ronny
(86) International application number: PCT/SE2002/002377
(87) International publication number: WO 2003/062027

(56) References cited:
- EP-A1- 0 503 699
- EP-A1- 1 172 270
- WO-A2-00/72463
- GB-A- 2 353 180
- US-A- 6 088 450
- US-B1- 6 249 727

## Description

### Field of the invention

The present invention relates to rock drilling equipments, and particularly to a method for identification of a user of rock drilling equipments according to the preamble of claim 1.

The present invention further relates to a system according to the preamble of claim 10.

### Background of the invention

Rock drilling equipment may be used in a number of areas. For example, rock drilling equipments may be used in tunnelling, underground mining, rock reinforcement and raise boring.

These applications often use big machines that are complex and very expensive. Further, the machines often work in a very exposed environment with tasks that in short time give rise to wear and limited functionality.

These machines therefore require regular service and control. The current machines often have an internal computerized control system that collects status information for a number of functions. These functions may consist of e.g. oil temperatures, hydraulic pressures, penetration rate etc. The control system may further create event and error logs in order to enable subsequent analysis of what has happened and when. The control system may further collect statistics of how the machine has been working and how much.

The control system may be rather comprehensive, and to avoid that the wrong persons performs the wrong things the availability of the control system may be divided into a number of authorisation levels. For example, an operator may have access to a certain amount of functionality in the control system, while service personnel may need to have access to more and/or other functions.

The different authorisation levels may be made available through various passwords that the user inputs via a keyboard in the rock drilling equipment.

A problem with the current solution is that the passwords may be misused and lend between user so that wrong person may have access to wrong functions, which lowers the safety in the system.

A method and system according to the preamble of claims 1 and 8 is disclosed in GB-A-2 353 180. The document, however, shows an automatic transmission of ID-codes.

### Summary of the invention

The object of the present invention to provide a method for identifying a user of rock drilling equipments, which solves the above mentioned problem.

This object is achieved by a method according to claim 1.

Another object of the present invention to provide a system for identifying a user of rock drilling equipments that solves the above mentioned problem.

This object is achieved by a system according to claim 10.

At identification of a user a user identity and/or user category is transmitted to the rock drilling equipment from a portable unit, e.g. a smartcard, an ID card, a Bluetooth transponder, a computer or a hand-hold computer, e.g. a PDA (Personal Digital Assistant), via a wireless interface.

This has the advantage that only a person with access to the portable unit gets access those functions that the user identity or user category stored in the portable unit shall have access to. Further, this has the advantage that no login via a keyboard or the like has to be carried out.

In a preferred embodiment the user identity or user category is transmitted to the rock drilling equipment by user initiation when a portable unit is within a certain distance from the rock drilling equipment. This has the advantage that as soon as e.g. an operator comes near the rock drilling equipment he may get access to the functions he is entitled to use.

Conversely, the rock drilling equipment may switch over to a state with low functionality, where only basic functions that are available to all users, if any, functions, when the portable unit is moved from the rock drilling equipment by more than a certain distance.

The transmission is carried out user initiated, which has the advantage that access to increased availability will not be given in various machines simultaneously if they happen to be standing close to each other.

Each user may carry his own portable unit with his own user identity and/or user category. Thereby each user only gets access to the functions he personally has the right to use, which increases the safety considerably. For example the portable unit may be integrated with the user's ID card.

There may be a plurality of user categories. Customer categories that may consist of driller, service engineer, planner or preproduction engineer. Further, there may be user categories that are only intended for the manufacturer or a hirer out of the machine. This has the advantage that each user category immediately gets access to the functions they need.

### Brief description of the drawings

The invention will now be explained more in detail my means of embodiments and in connection with the attached drawings, of which:
Fig. 1 shows an example of a control system in a rock drilling equipment.
Fig. 2 shows a preferred embodiment of the present invention.
Fig. 3 shows an example of the use of the present invention.

### Detailed description of preferred embodiments of the invention

In the following description of the invention the term machine is used to a large extent instead of rock drilling equipment.

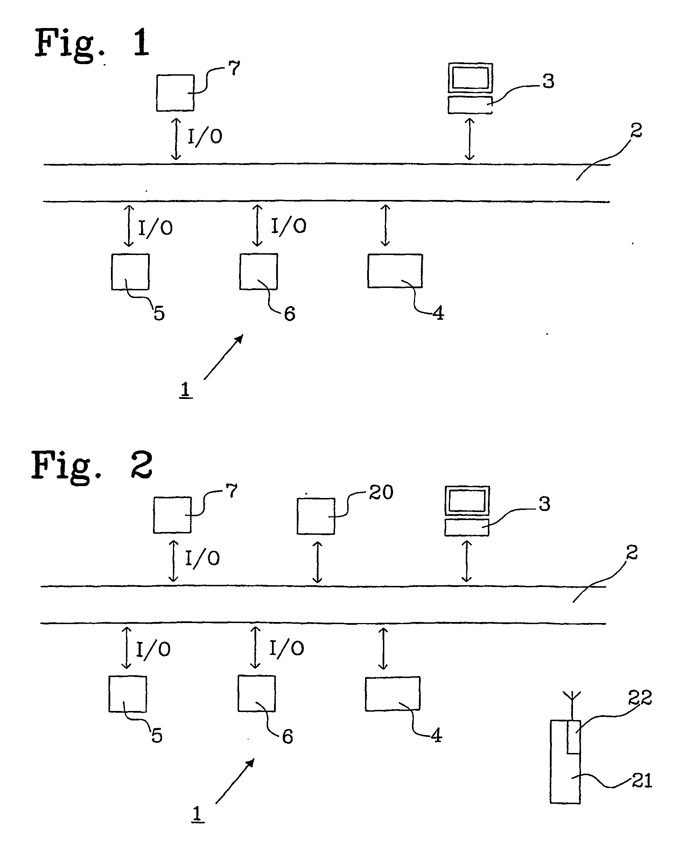

Fig. 1 depicts an example of a structure of a rock drilling equipment control system 1. In this case, the control system 1 is built up around a CAN bus 2 (Controller Area Network). The CAN bus is a two wire serial bus, which is working with high data integrity and which is suitable for use in environments with much disturbance. A MMI (Man Machine Interface) interface 3, which can be used by an operator to communicate with the control system 1, is connected to the CAN bus 2. A central unit 4, which controls and supervises the system, is also connected to the bus 2. The bus is further provided with a number of input/output units 5, 6, 7 (I/O-units) for communication with various parts of the rock drilling equipment. These I/O-units may for example be used to provide control signals to the means that control movement of the rock drilling equipment. These means may consist of the engine(s) that control advances of the equipment, or, when the rock drilling equipment comprises one or more drilling booms, control of the movement and function of the drilling booms.

In the control system, preferably in the central unit 4, there is stored a list of users and/or user categories that has the right to use the rock drilling equipment, along with their passwords.

The control system also handles a login procedure where a user login via the MMI unit 3 prior to the use of the rock drilling equipment. When the user login he gets access to the functions he has the right to use. A driller needs access to a certain amount of functions to be able to perform his job, and a service man needs access to more and/or other functions in order to perform service of the machine. Since rock drilling equipment often is a very complex machine it is important from a safety point of view that each person only has access to the functionality that person really needs. For example, certain users may not change characteristics of the rock drilling equipment.

The users are often divided into user categories. The customer that has bought the machine may have a number of user categories, e.g. driller, service personnel, planner or preproduction engineer. Further the manufacturer, e.g. Atlas Copco, may have a number of user categories defined that may be used in more extensive services or repairs that are carried out by the manufacturer. The manufacturer or someone who provides leasing may have a number of machines that are leased and that are provided with user categories that enables the hirer out to e.g. control the number of hours that the machine is used so that correct debiting may be carried out. Additionally, there may be other user categories for persons with tasks that are connected to the machine.

Each of these user categories may have an own password or code. A problem with these passwords or codes is that they are easily spread and that in the end "everybody" may have knowledge of each others passwords or codes and thereby get access to all functionality. Thereby the safety in the system is lowered.

The present invention aims to increase the safety in the system.

In fig. 2 a preferred embodiment of the present invention is shown. The figure shows a control system according to fig. 1 that has a new unit 20 connected to the bus 2. The unit 20 communicates with the rest of the control system and has a transmitter and/or receiver to be able to transmit and receive data wirelessly. Further, a receiver unit 21 is provided with a transmitter and/or receiver 22 for wireless communication. In this described embodiment the wireless interface consists of a Bluetooth interface.

Bluetooth is a method/protocol for short distance communication between various units in the frequency band 2.4-2.5 GHz. The communication usually takes place between units that are within 10 meters from each other. Bluetooth represents prior art and will not be described more in detail.

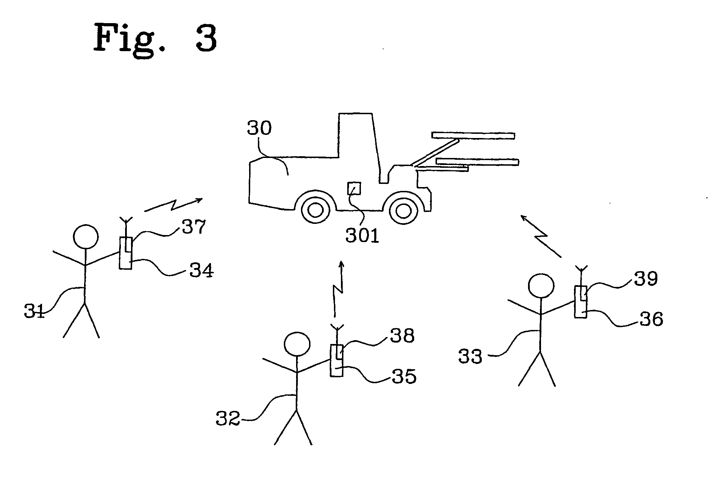

The function of the invention will now be described more in detail with reference to fig. 3.

In fig. 3 a rock drilling equipment 30, provided with a unit 301 for Bluetooth communication, is shown. Further, the figure shows a number of users 31, 32, 33 of the rock drilling equipment 30. The users 31, 32, 33 are provided with portable units 34, 35, 36, which comprise means 37, 38, 39 for Bluetooth communication. The portable units may e.g. consist of a smartcard, an ID card, a computer or handheld computer, e.g. a Personal Digital Assistant (PDA), with integrated Bluetooth functionality.

When a user 31, 32, 33 shall login on a rock drilling equipment he does not have to come into physical contact with the machine, it is enough that he comes within a radius of approximately 10 m from the machine in order for a communication link according to the Bluetooth technology to be automatically established between the machine and the portable unit 34, 35, 36. The data transmission is arranged to be carried out as soon as a communication link is established by user initiation, when the portable unit 34, 35, 36 comes within range of the rock drilling equipment 30, such that information on the users identity and/or user category is transmitted from the portable unit 34, 35, 36 to the rock drilling equipment 30. Thereby the user 31, 32, 33 does not have to mess with login via the keyboard, instead he gets easy and convenient access to "his" functions and may go on with his tasks at once.

When the user then leaves the rock drilling equipment the machine, when the user with the portable unit has come out of reach of the Bluetooth unit in the machine, may switch over to a state with low functionality where only basic functions, if any, being available to all users functions.

If the user is a service engineer the identification function may be combined with the method for transmission of operational status which, is described in the co-pending application 0104380-1. The service engineer may then at once on a display on the portable unit 31, 32, 33 see if anything is wrong with the machine and needs to be attended to. Further, the identifying function may be combined with the method for transmission of function parameters, which is described in the parallel application 0104381-9, whereupon the user immediately gets access to his personal function parameters.

Preferably, each user has his own personal portable unit with the users identity and/or user category programmed. The portable unit may e.g. consist of an ID card with integrated functionality in order to be able to send the users identity and/or user category to the rock drilling equipment. Thereby problems with codes and/or passwords that may be spread and used by others is avoided. Consequently, a considerably safer system is obtained.

In the above described embodiment the transmission of the user identity and/or user category is carried out automatically as soon as the rock drilling equipment and the portable unit comes within a certain distance from each other. It may, however, be suitable that the transmission is user initiated. This may be solved in a simple manner, e.g. by carrying out the transmission as soon as the portable unit is turned on, provided that the rock drilling equipment and the receiver unit are within range of each other, or that transmission only may take place after a user of the portable unit has activated some process or function in the portable unit or the rock drilling equipment. This may be necessary when several users are present at the same machine. Further, the system may be arranged such that the presently logged in user automatically may be logged out when a user belonging to a higher user category with access to more functions is within range of the rock drilling equipment and wishes to login.

In the above examples the control system unit for wireless communication has been described as a separate unit that is connected to the bus. It should be understood, however, that this unit may as well be integrated in any other unit belonging to the control system, e.g. the central unit.

Further, the invention has been described with a Bluetooth based interface. The invention may however be realised with an arbitrary wireless interface, e.g. an IR interface or any other radio interface, such as GSM or WLAN.

## Claims

1. Method for identification of a user (31, 32, 33) of rock drilling equipments (30), which rock drilling equipment includes functionality, whereof different parts are available for different user categories, where each user is assigned to at least one user category, whereby at identification of the user (31, 32, 33) the user identity and/or user category is transmitted to the rock drilling equipment (30) from a portable unit (34, 35, 36) via a wireless interface, **characterised in that** the transmission being user initiated.

2. Method according to claim 1, **characterised in that** the portable unit (34, 35, 36) consists of any one from the group: Bluetooth transponder, smartcard, ID card, computer or hand-hold computer, e.g. a PDA (Personal Digital Assistant).

3. Method according to claim 2, **characterised in that** the user identity and/or user category can be transmitted to the rock drilling equipment (30) when the portable unit (34, 35, 36) is within a certain distance from the rock drilling equipment (30).

4. Method according to any of the claims 2-3, where the rock drilling equipment (30) is used by two or more users, **characterised in that** each user (31, 32, 33) is provided with a portable unit (34, 35,36) from which the user's (31, 32, 33) identity or user category can be transmitted to the rock drilling equipment (30).

5. Method according to claim 3, **characterised in that** when the portable unit (34, 35, 36) is moved from the rock drilling equipment (30) by more than a certain distance, the rock drilling equipment (30) switches over to a state with low accessible functionality.

6. Method according to any of the claims 1-5, **characterised in that** the wireless interface consists of a Bluetooth interface, a GSM interface, an IR interface, WLAN or any other radio interface.

7. Method according to any of the claims 1-6, **characterised in that** the user category may consist of any of the group: driller, service engineer, planner, preproduction engineer, category intended for a manufacturer or a hirer out.

8. System for identification of a user (31, 32, 33) of rock drilling equipments (30), which rock drilling equipment includes functionality, whereof different parts are available for different user categories, where each user (31, 32, 33) is assigned to at least one user category, whereby the rock drilling equipment (30) is arranged to receive a user identity and/or user category from a portable unit (34, 35, 36) via a wireless interface, **characterised in that** the transmission being arranged to be user initiated.

9. System according to claim 8, **characterised in that** the portable unit (34, 35, 36) consists of any one from the group: Bluetooth transponder, smartcard, ID card, computer or hand-hold computer, e.g. a PDA (Personal Digital Assistant).

10. System according to claim 8, **characterised in that** the rock drilling equipment (30) is arranged to receive the user identity and/or user category from the portable unit (34, 35, 36) when the portable unit is within a certain distance from the rock drilling equipment (30).

11. System according to any of the claims 9-10, **characterised in that** the wireless interface consists of a Bluetooth interface, a GSM interface, an IR-interface, WLAN or any other radio interface.

## Patentansprüche

1. Verfahren zur Identifikation eines Benutzers (31, 32, 33) einer Gesteinsbohrvorrichtung (30), welche Gesteinsbohrvorrichtung verschiedene Funktionsweisen beinhaltet, wovon verschiedene Teile für verschiedene Benutzergruppen zugänglich sind, wobei jeder Benutzer zumindest einer Benutzergruppe zugeordnet ist, wobei bei der Identifikation des Benutzers (31, 32, 33) die Benutzeridentität und/oder Benutzergruppe von einer tragbaren Einheit (34, 35, 36) über eine kabellose Schnittstelle an die Gesteinsbohrvorrichtung (30) übertragen wird, **dadurch gekennzeichnet, dass** die Übertragung benutzerveranlasst ist.

2. Verfahren nach Anspruch 1, **dadurch gekennzeichnet, dass** die tragbare Einheit (34, 35, 36) aus einem beliebigen der folgenden Gruppe besteht: Bluetooth-Transponder, Smartcard, ID-Karte, Computer oder Handheld, z.B. ein PDA (Persönlicher Digitaler Assistent).

3. Verfahren nach Anspruch 2, **dadurch gekennzeichnet, dass** die Benutzeridentität und/oder Benutzergruppe an die Gesteinsbohrvorrichtung (30) übertragen werden kann, wenn sich die tragbare Einheit (34, 35, 36) innerhalb einer bestimmten Distanz von der Gesteinsbohrvorrichtung (30) befindet.

4. Verfahren nach einem der Ansprüche 2 bis 3, wobei die Gesteinsbohrvorrichtung (30) von zwei oder mehr Benutzern verwendet wird, **dadurch gekennzeichnet, dass** jeder Benutzer (31, 32, 33) mit einer tragbaren Einheit (34, 35, 36) ausgerüstet ist, von welcher die Identität oder Gruppe des Benutzers (31, 32, 33) an die Gesteinsbohrvorrichtung (30) übertragen werden kann.

5. Verfahren nach Anspruch 3, **dadurch gekennzeichnet, dass**, wenn die tragbare Einheit (34, 35, 36) von der Gesteinsbohrvorrichtung (30) um mehr als eine bestimmte Distanz wegbewegt wird, die Gesteinsbohrvorrichtung (30) in einen Zustand mit wenigen zugänglichen Funktionsweisen umschaltet.

6. Verfahren nach einem der Ansprüche 1 bis 5, **dadurch gekennzeichnet, dass** die kabellose Schnittstelle aus einer Bluetooth-Schnittstelle, einer GSM-Schnittstelle, einer IR-Schnittstelle, einem WLAN oder irgendeiner anderen Funkschnittstelle besteht.

7. Verfahren nach einem der Ansprüche 1 bis 6, **dadurch gekennzeichnet, dass** die Benutzergruppe aus einer der folgenden Gruppe ausgewählt werden kann: Bohrer, Wartungstechniker, Planer, Vorlauftechniker, für einen Hersteller oder einen Verleiher bestimmte Gruppe.

8. System zur Identifikation eines Benutzers (31, 32, 33) von Gesteinsbohrvorrichtungen (30), welche Gesteinsbohrvorrichtung verschiedene Funktionsweisen beinhaltet, wovon verschiedene Teile für verschiedene Benutzergruppen zugänglich sind, wobei jeder Benutzer (31, 32, 33) zumindest einer Benutzergruppe zugeordnet ist, wobei die Gesteinsbohrvorrichtung (30) geeignet ist, um eine Benutzeridentität und/oder Benutzergruppe von einer tragbaren Einheit (34, 35, 36) über eine kabellose Schnittstelle zu empfangen, **dadurch gekennzeichnet, dass** die Übertragung eingerichtet ist, um von einem Benutzer veranlasst zu werden.

9. System nach Anspruch 8, **dadurch gekennzeichnet, dass** die tragbare Einheit (34, 35, 36) von irgendeiner der folgenden Gruppe ausgewählt ist: Bluetooth-Transponder, Smartcard, ID-Karte, Computer oder Handheld, z.B. ein PDA (Persönlicher Digitaler Assistent).

10. System nach Anspruch 8, **dadurch gekennzeichnet, dass** die Gesteinsbohrvorrichtung (30) geeignet ist, die Benutzeridentität und/oder Benutzergruppe von der tragbaren Einheit (34, 35, 36) zu empfangen, wenn die tragbare Einheit innerhalb einer bestimmten Distanz von der Gesteinsbohrvorrichtung (30) ist.

11. Vorrichtung nach einem der Ansprüche 9 bis 10, **dadurch gekennzeichnet, dass** die kabellose Schnittstelle aus einer Bluetooth-Schnittstelle, einer GSM-Schnittstelle, einer IR-Schnittstelle, einem WLAN oder irgendeiner anderen Funkschnittstelle besteht.

## Revendications

1. Procédé d'identification d'un utilisateur (31, 32, 33) d'équipements de forage de roches (30), où ledit équipement de forage de roches inclut une fonctionnalité, avec laquelle différentes catégories d'utilisateurs disposent de différentes parties, où chaque utilisateur correspond à au moins une catégorie d'utilisateur, au moyen de laquelle l'identification de l'utilisateur (31, 32, 33) l'identité de l'utilisateur et/ou la catégorie de l'utilisateur sont transmises à l'équipement de forage de roches (30) à partir d'une unité portative (34, 35, 36) à travers une interface sans fil, **caractérisé en ce que** la transmission est mise en oeuvre par l'utilisateur.

2. Procédé selon la revendication 1, **caractérisé en ce que** l'unité portative (34, 35, 36) consiste en une unité quelconque du groupe: récepteur Bluetooth, carte à puce, carte ID, ordinateur ou ordinateur portatif, par exemple un PDA (Assistant Numérique Personnel).

3. Procédé selon la revendication 2, **caractérisé en ce que** l'identité de l'utilisateur et/ou la catégorie de l'utilisateur peut être transmise à l'équipement de forage de roches (30) lorsque l'unité portative (34, 35, 36) se trouve à une certaine distance de l'équipement de forage de roches (30).

4. Procédé selon l'une des revendications 2-3, où l'équipement de forage de roches (30) est utilisé par deux ou plusieurs utilisateurs, **caractérisé en ce que** chaque utilisateur (31, 32, 33) est pourvu d'une unité portative (34, 35,36) à partir de laquelle l'identité de l'utilisateur (31, 32, 33) ou la catégorie de l'utilisateur peut-être transmise à l'équipement de forage de roches (30)

5. Procédé selon la revendication 3, **caractérisé en ce que** lorsque l'unité portative (34, 35, 36) est déplacée depuis l'équipement de forage de roches (30) à plus d'une certaine distance, l'équipement de forage de roches (30) passe à un état de faible fonctionnalité accessible.

6. Procédé selon l'une des revendications 1-5, **caractérisé en ce que** l'interface sans fil consiste en une interface Bluetooth, une interface GSM, une interface IR, WLAN ou n'importe quelle autre interface radio.

7. Procédé selon l'une des revendications 1-6, **caractérisé en ce que** la catégorie de l'utilisateur peut inclure n'importe quel membre du groupe de: foreur, ingénieur de service, programmateur, ingénieur de pré production, une catégorie destinée à un fabricant ou à une entreprise de location.

8. Système d'identification d'un utilisateur (31, 32, 33) d'équipements de forage de roches (30), lequel équipement de forage de roches inclut une fonctionnalité, où différentes catégories d'utilisateurs disposent de différentes parties, où chaque utilisateur (31, 32, 33) correspond à au moins une catégorie d'utilisateur, au moyen duquel l'équipement de forage de roches (30) est disposé de manière à recevoir une identité d'utilisateur et/ou une catégorie d'utilisateur d'une unité portative (34, 35, 36) à travers une interface sans fil, **caractérisé en ce que** la transmission est destinée à être mise en oeuvre par l'utilisateur.

9. Système selon la revendication 8, **caractérisé en ce que** l'unité portative (34, 35, 36) consiste en une unité quelconque du groupe: récepteur Bluetooth, carte à puce, carte ID, ordinateur ou ordinateur portatif, par exemple un PDA (Assistant Numérique Personnel)

10. Système selon la revendication 8, **caractérisé en ce que** l'équipement de forage de roches (30) est disposé de manière à recevoir l'identité de l'utilisateur et/ou la catégorie de l'utilisateur de l'unité portative (34, 35, 25 36) lorsque l'unité portative se trouve à un certaine distance de l'équipement de forage de roches (30).

11. Système selon l'une des revendications 9-10, **caractérisé en ce que** l'interface sans fil consiste en une interface Bluetooth, une interface GSM , une Interface IR, WLAN ou n'importe quelle autre interface radio.
